Europäisches Patentamt

European Patent Office

Office européen des brevets

(11) Veröffentlichungsnummer: **0 210 370
B1**

## (12) EUROPÄISCHE PATENTSCHRIFT

(45) Veröffentlichungstag der Patentschrift: **14.03.90**

(51) Int. Cl.⁵: **B 62 D 33/06**

(21) Anmeldenummer: **86107214.8**

(22) Anmeldetag: **28.05.86**

(54) **Schlafkabine auf einem Fahrerhaus.**

(30) Priorität: **12.07.85 DE 3524994**

(43) Veröffentlichungstag der Anmeldung:
**04.02.87 Patentblatt 87/06**

(45) Bekanntmachung des Hinweises auf die
Patenterteilung:
**14.03.90 Patentblatt 90/11**

(84) Benannte Vertragsstaaten:
**AT DE FR GB IT NL SE**

(56) Entgegenhaltungen:
**EP-A-0 010 765
EP-A-0 033 648**

(73) Patentinhaber: **MAN Nutzfahrzeuge
Aktiengesellschaft
Dachauer Strasse 667 Postfach 50 06 20
D-8000 München 50 (DE)**

(72) Erfinder: **Schäfer, Ortwin
Wilhelm-Leuschner-Strasse 9
D-6086 Riedstadt (DE)**

Courier Press, Leamington Spa, England.

**Beschreibung**

Die Erfindung betrifft eine Schlafkabine mit mindestens zwei Schlafliegen, die über dem Fahrerhaus eines Lastkraftwagens angeordnet ist.

Es sind Schlafkabinen vielfältiger Art mit 1 Schlafliege bekannt. Diese weisen auch zum Teil eine aerodynamische Ausbildung der Vorderseite auf. Es liegt auf der Hand, daß Schlafkabinen mit 1 Schlafliege zwar sowohl aerodynamisch und wie auch im Styling optimal ausbildbar sind, sie jedoch insbensondere auf langen Fahrstrecken und damit auch unabdingbaren Rastzeiten, über keine weitere, für den zweiten Fahrer zur Verfügung stehende Schlafliege aufweisen.

Andere Bauarten von Schlafkabinen haben zwar zwei Schlafliegen, beanspruchen aber auch dementsprechend viel Raum, entweder in der Anordnung von zwei nebeneinander angebrachten Schlafliegen (vgl. M.A.N.-Druckschrift "Forschen, planen, bauen, Heft 9, April 1978, Seite 42, Bild 11) oder gemäß DE—PS 28 48 158 mit einem kubischen Innenraum, solcher Art daß sich die zwei Schlafliegen in gegeneinander versetzten, unterschiedlichen Ebenen befinden, Diese bekannten Ausführungsformen haben wesentliche Nachteile, nämlich, daß hier im Inneren sehr beengte Verhältnisse vorliegen, Sitzfreiheit nicht vorhanden ist und infolge kubischer Ausgestaltung eine aerodynamische Ausbildung und ein formschönes Styling nicht möglich sind.

Bei einer weiteren eine zweite Schlafliege aufweisende Kabine ist ein Fahrerhausumbau (bei Rastzeiten) notwendig, dies ist den sowieso schon ermüdeten Fahrern kaum zuzumuten.

Der Erfindung liegt die Aufgabe zugrunde, eine Schlafkabine für Fahrer zu schaffen, die die Anordnung von zwei Schlafkabinen mit bequemen Zugang sowie Bewegungs- und Sitzfreiheit bei geringem Raumbedarf gestattet und im Hinblick auf Aerodynamik und Styling optimal ausbildbar ist.

Dies wird erfindungsgemäß dadurch erreicht, daß die Schlafkabine aus einer auf dem Dach des Fahrerhauses angebrachten, eine Schlafliege aufweisenden ersten Kabine mit aerodynamisch ausgebildeter Vorderwandaußenkontur und einer darin ein- und ausfahrbaren, eine weitere Schlafliege aufweisenden zweiten Kabine besteht, wobei im eingefahrenen Zustand vorzugsweise während des Fahrbetriebes nur eine Liege benutzbar ist, während im ausgefahrenen Zustand, also bei Fahrzeugstillstand, zwei sich dann in unterschiedlichen Ebenen befindliche Schlafliegen benutzbar sind. Der erfinderische Gedanke ist hier, mit zwei ineinander versenkbaren Kabinen zwei unterschiedlichen Außenkonturstrukturen entsprechenden unterschiedliche Betriebzustände zu erzielen, so daß während der Fahrt die beiden Teilkabinen bei aerodynamischer Ausbildung der Frontseite ineinander versenkt sind, wobei Bewegungs- und Sitzfreiheit für eine Person gegeben ist und während der Rastzeiten die zweite Teilkabine ausfahrbar ist und entsprechenden Platzbedarf für eine zweite Person, ebenfalls mit genügender Bewegungs- und Sitzfreiheit, bietet.

Integraler Vorteil dieser Erfindung ist es, daß bei Benutzung der unteren Liege keine Höhenverstellung notwendig ist.

Auch ist es für den Käufer eines Lastkraftwagens ggf. günstig, die Möglichkeit zu haben, den Wagen zunächst mit einer Schlafliege zu kaufen und die zweite als Nachrüstsatz beliebig später.

Eine erfinderische Eigenart, das Gesamtkonzept betreffend, ist, es, daß bei 1-Mannnutzung der Kabine die Schlafliege der zweiten Teilkabine belegt wird. Solcher Art ist die Sitzfreiheit der Person am höchsten Punkt der Kabinenvorderfrontseite gegeben.

Nach einem besonders wichtigem Merkmal der Erfindung weisen im ausgefahrenen Zustand der zweiten Kabine beide in unterschiedlichen Ebenen der Kabinen befindliche Schlafliegen Sitzfreiheit auf, wobei die Schlafliege der starren Kabine sich dann diagonal durch die Kabine erstreckt, während die in der verstellbaren Kabine befindliche Schlafliege annähernd entlang der Kabinenrückwand angebracht ist. Durch die vorteilhafte Anordnung wird die Sitzfreiheit von zwei Fahrerhaus und Schlafliegen benutzenden Personen ermöglicht.

Nach einer zweckmäßigen Ausgestaltung der Erfindung ist die Kabinenfrontwand schräg oder kurvenförmig, aerodynamisch otpimiert, ausgebildet, durch diese Maßnahme wird der Fahrerhauswiderstand infolge Winddruckes, insbesonder bei höheren Geschwindigkeiten, reduziert, was einen geringeren Kraftstoffverbrauch zur Folge hat; damit verbunden ist die Möglichkeit eines formschönen Stylings mittels der fliehenden Vorderwand.

Gemäß einem anderen Merkmal der Erfindung, ist die schwenkbare Kabine in den Gelenken drehbar gelagert und über einen an der Rückseite der Kabine befindlichen Zylinder aus- und einfahrbar. Druckluft steht schon bei vielen Fahrzeugen von Haus aus zur Verfügung, so daß die Höhenverstellung der verstellbaren Kabine problemlos durchgeführt werden kann. Vorteilhafterweise ist die schwenkbare Kabine mit ihren Seitenwänden innerhalb der Seitenwände der mit dem Dach des Fahrerhauses verbundenen Kabine angeordnet, und est befindet sich zwischen den Wänden und mindestens bereichsweise an der Vorderwand eine geräuschdämmende und wärmeisolierende Schicht. So kann durch diese Sandwichbauweise der durch Fahrtwind, Verkehrslärm und Motor/Getriebe verursachte Lärmpegel wesentlich reduziert werden. Gleichzeitig ist eine Wärme/Kälteisolierung gegeben, die nicht unwesentlich zum Wohlbefinden der Fahrer beiträgt.

Nach einem Merkmal der Erfindung sind zwei Sitzpolster in ungefähr diagonaler Ausrichtung zueinander in der schwenkbaren Kabine angeordnet. Die so vorgesehenen Polster ergeben sowohl bei Einmann- wie bei Zweimann-Nutzung einen optimalen Rückenhalt.

Weitere Vorteile und Merkmale der Erfindung sind den Ansprüchen, der Beschreibung und den Zeichnungen zu entnehmen.

Es zeigen:

Fig. 1 Eine Starr auf dem Fahrerhaus angeordnete, sowie eine ausgeschwenkte Kabine in Seitenansicht.

Fig. 2 eine starr auf dem Fahrerhaus angeordnete sowie eine eingeschwenkte Kabine in Seitenansicht,

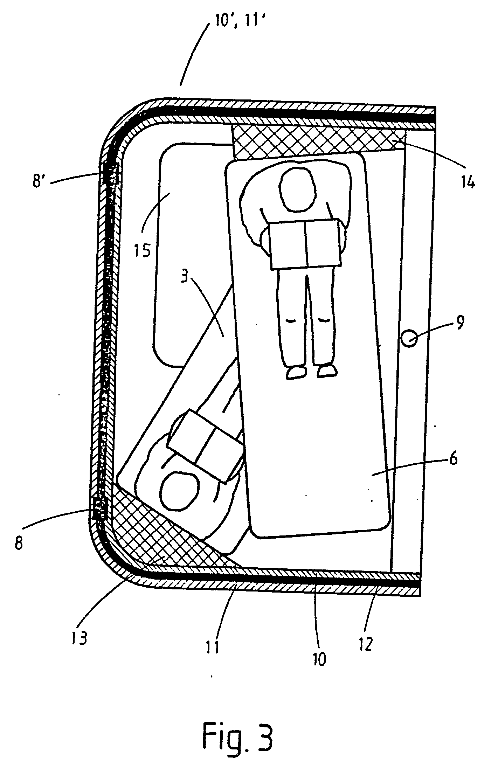

Fig. 3 eine Draufsicht einer Kabine nach Fig. 1, und

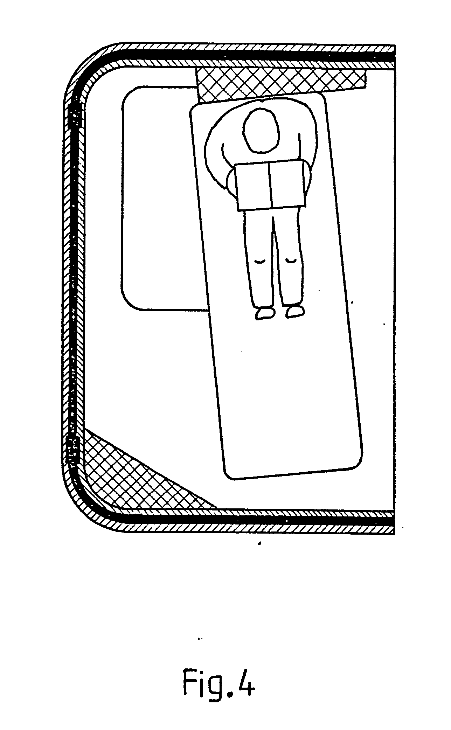

Fig. 4 eine Draufsicht einer Kabine nach Fig. 2.

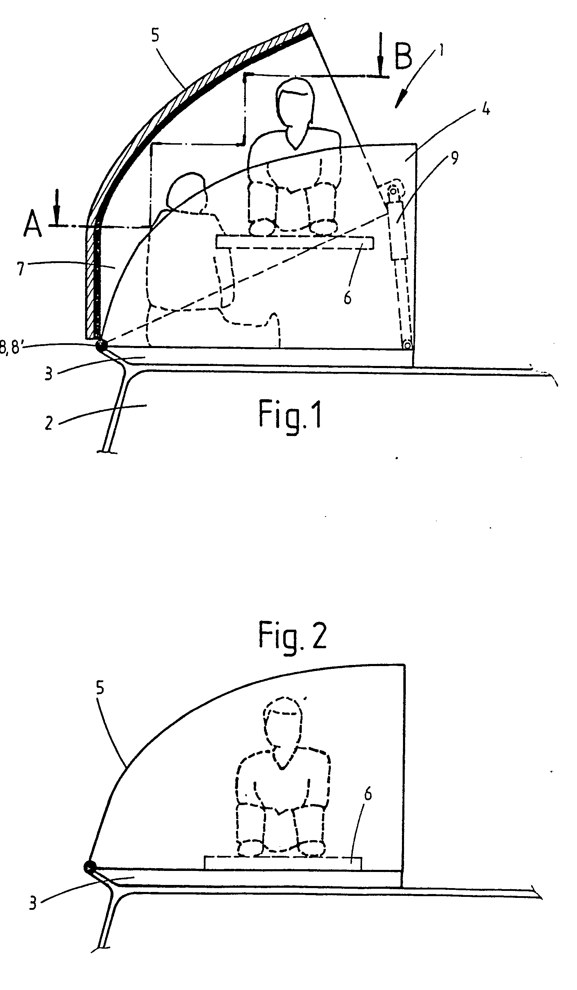

Fig. 1 zeigt eine auf dem Fahrerhaus 2 angebrachte Schlafkabine 1. Diese setzt sich zusammen aus einer starren Kabine 4 mit einer Schlafliege 3 und einer ausschwenkbaren Kabine 7 mit einer Schlafliege 6. Die schwenkbäre Kabine 7 befindet sich mit ihren Seitenwänden 10, 10' innerhalb der Seitenwände 11, 11' der starren Kabine. Zwischen den Wänden und ggf. auch an der Forderwand 5 können in Sandwichbauweise Isolierschichten 12 zum Wärme/Kälteschutz, wie auch zur Lärmpegelreduzierung, angebracht sein. Die Kabine 7 ist in den Gelenken 8, 8' schwenkbar gelagert und kann über einen oder mehrere Zylinder 9 ein- und ausgefahren werden. An den Wänden 10, 10' der Kabine 7 sind Sitzpolster 13, 14 in etwa diagonaler Ausrichtung zueinander angeordnet. Durchstieg 15 befindet sich im liegenfreien Raum.

## Bezugszeichenliste

1 Schlafkabine (bestehend aus 4 + 7)
2 Dach des Fahrerhauses
3 Schlafliege in 4
4 Kabine
5 Vorderwand/Außenkontur
6 Schlafliege in 7
7 Kabine
8,8' Gelenke
9 Zylinder
10,10' Seitenwände von 7
11,11' Seitenwände von 4
12 Schicht (wärmeisolierend und geräuschdämmend)
13 Polsterrückwand in 7
14 Polsterrückwand in 7
15 Durchstieg

## Patentansprüche

1. Schlafkabine mit mindestens zwei Schlafliegen, die über dem Fahrerhaus eines Lastkraftwagens angeordnet ist, dadurch gekennzeichnet, daß die Schlafkabine (1) aus einer auf dem Dach (2) des Fahrerhauses angebrachten, eine Schlafliege (3) aufweisenden ersten Kabine (4) mit aerodynamisch ausgebildeter Forderfront-Außenkontur (5) und einer darin ein- und ausfahrbaren, eine weiter Schlafliege (6) aufweisenden zweiten Kabine (7) besteht, wobei im eingefahrenen Zustand, vorzugsweise während des Fahrbetriebes, nur eine, nämlich Liege (3) benutzbar ist, während im ausgefahrenen Zustand, also bei Fahrzeugstillstand, zwei sich dann in unterschiedlichen Ebenen befindliche Schlafliegen (3, 6) benutzbar sind.

2. Schlafkabine nach Anspruch 1, dadurch gekennzeichnet, daß im eingefahrenen Zustand der zweiten Kabine (7) deren Schlafliege (6) für die Ein-Mann-Nutzung belegbar ist.

3. Schlafkabine nach den Ansprüchen 1 oder 2, dadurch gekennzeichnet, daß im ausgefahrenen Zustand der zweiten Kabine (7) bei in unterschiedlichen Ebenen der Kabinen (4, 7) befindliche Schlafliegen Sitzfreiheit aufweisen, wobei die Schlafliege (3) der starren Kabine (4) sich dann diagonal durch die Kabine erstreckt, während die in der verstellbaren Kabine (7) befindliche Schlafliege (6) annähernd entland der Kabinenrückwand angebracht ist.

4. Schlafkabine nach den Ansprüchen 1 bis 3, dadurch gekennzeichnet, daß auch im eingefahrenen Zustand der verstellbaren Kabine (7) in der, nunmehr annähernd konturengleich Kabineneinheit (4, 7), bei Benutzung der Schlafliege (6) Sitzfreiheit besteht.

5. Schlafkabine nach einem oder mehreren der Ansprüche 1 bis 4, dadurch gekennzeichnet, daß die Kabinenfrontwand (5) schräg oder kurvenförmig, aerodynamisch optimiert, ausgebildet ist.

6. Schlafkabine nach einem oder mehreren der Ansprüche 1 bis 5, dadurch gekennzeichnet, daß die Kabine (7) in Gelenken (8, 8') drehbar gelagert und über einen an der Rückwand der Kabine befindlichen Zylinder (9) hydraulisch oder mittels Pressluft aus- und einfahrbar ist.

7. Schlafkabine nach einem oder mehreren der Ansprüche 1 bis 6, dadurch gekennzeichnet, daß die Kabine (7) mit ihren Seitenwänden (10, 10') innerhalb der Seitenwände (11, 11') der Kabine (4) angeordnet ist.

8. Schlafkabine nach einem oder mehreren der Ansprüche 1 bis 6, dadurch gekennzeichnet, daß die Kabine (7) mit ihren Seitenwänden (10, 10') außerhalb der Seitenwände (11, 11') der Kabine (4) angeordnet ist.

9. Schlafkabine nach einem oder mehreren der Ansprüche 1 bis 8, dadurch gekennzeichnet, daß zwischen den Seitenwänden (10, 10') und (11, 11') und mindestens bereichsweise an der Frontwand (5) eine geräuschdämmende und wärmeisolierende Schicht (12) angeordnet ist.

10. Schlafkabine nach einem oder mehreren der Ansprüche 1 bis 9, dadurch gekennzeichnet, daß in der Kabine (7) Sitzpolster (13, 14) in ungefähr diagonaler Ausrichtung zueinander angeordnet sind.

11. Schlafkabine nach einem oder mehreren der Ansprüche 1 bis 10, dadurch gekennzeichnet, daß bodenseitig der Schlafkabine (1) ein Durchstieg (14) angeordnet ist.

## Revendications

1. Cabine de couchage comportant au moins deux compartiments de couchage, disposés dans le compartiment conducteur d'un camion, caractérisée en ce que le compartiment de couchage (1) se compose d'une première cabine (4) de contour avant aérodynamique, présentant un compartiment de couchage, monté sur le toit du compartiment conducteur, et d'une deuxième cabine (7) rétractable et déployable à l'intérieur, présentant un compartiment de couchage (6) supplémentaire, une seule, la couchette (3), étant utilisable à l'état rétracté, de préférence pendant le fonctionnement du véhicule, tandis qu'à l'état déployé, donc à l'arrêt du véhicule, deux compartiments de couchage (3, 6) se trouvant dans des plans différents sont alors utilisables.

2. Cabine de couchage selon la revendication 1, caractérisée en ce qu'à l'état rétracté de la deuxième cabine (7), un compartiment de couchage (6) est utilisable par une seule personne.

3. Cabine de couchage selon la revendication 1 ou 2, caractérisée en ce qu'à l'état déployée de la deuxième cabine (7), lorsque les compartiments de couchage se trouvent dans des plans différents des cabines (4, 7), il y a liberté permettant de s'asseoir, le compartiment de couchage (3) de la cabine fixe (4) se trouvant alors en diagonale dans la cabine, tandis que le compartiment de couchage (6) se trouvant dans la cabine mobile est montée à peu près le long de la paroi arrière de cabine.

4. Cabine de couchage selon l'une quelconque des revendications 1 à 3, caractérisée en ce qu'également à l'état rétracté de la cabine mobile (7), dans lequel l'ensemble de cabine (4, 7) présente à peu près le contour, il y a liberté de s'asseoir lors de l'utilisation du compartiment de couchage (6).

5. Cabine de couchage selon l'une quelconque des revendications 1 à 4, caractérisée en ce que la paroi avant de cabine (5) est inclinée ou de forme courbe, conçue aérodynamiquement.

6. Cabine de couchage selon l'une quelconque des revendications 1 à 5, caractérisée en ce que la cabine (7) est montée tournante dans des articulations (8, 8') et déployable et rétractable, hydrauliquement ou au moyen d'air comprimé, par l'intermédiaire d'un vérin (9) se trouvant sur la paroi arrière de la cabine.

7. Cabine de couchage selon l'une quelconque des revendications 1 à 6, caractérisée en ce que la cabine (7) est disposée avec ses parois latérales (10, 10') situées à l'intérieur des parois latérales (11, 11') de la cabine (4).

8. Cabine de couchage selon l'une quelconque des revendications 1 à 6, caractérisée en ce que la cabine (7) est disposée avec ses parois latérales (10, 10') situées à l'extérieur des parois latérales (11, 11') de la cabine (4).

9. Cabine de couchage selon l'une quelconque des revendications 1 à 8, caractérisée en ce qu'une couche (12) amortissant le bruit et isolante thermiquement, est déposée entre les parois latérales (10, 10') et (11, 11') et au moins par zones sur la paroi avant (5).

10. Cabine de couchage selon l'une quelconque des revendications 1 à 9, caractérisée en ce que des coussins de siège (13, 14) sont disposés dans la cabine (7), en une orientation à peu près diagonale les uns par rapport aux autres.

11. Cabine de couchage selon l'une quelconque des revendications 1 à 10, caractérisée en ce qu'une montée d'accès (15) est disposée côté plancher de la cabine de couchage (1).

## Claims

1. A sleeping cab having at least two sleeping bunks and being arranged over the driver's cab of a lorry, characterised in that the sleeping cab (1) comprises a first cab (4) arranged on the roof (2) of the driver's cab and having a bunk (3), the first cab (4) having a front with an external contour (5) of aerodynamic construction, and a second cab (7) retractable into the first cab (4) and extendable therefrom and having a further bunk (6), wherein, in the retracted condition, preferably while the vehicle is being driven, only one bunk, namely (3), is usable, whereas in the extended condition, i.e. when the vehicle is stationary, two bunks (3, 6), located in different planes, are then available for use.

2. A sleeping cab according to claim 1, characterised in that in the retracted condition of the second cab (7), its bunk (6) is usable for occupation by one person.

3. A sleeping cab according to claims 1 or 2, characterised in that in the extended condition of the second cab (7), when the bunks are located in different planes of the cabs (4, 7), free space for sitting is available, the bunk (3) of the fixed cab (4) then extending diagonally through the cab, whereas the bunk (6) located in the adjustable cab (7) is arranged approximately along the rear wall of the cab.

4. A sleeping cab according to claims 1 to 3, characterised in that also in the retracted condition of the adjustable cab (7), free space for sitting exists in the cab unit (4, 7) whose contours are now approximately the same, even when the bunk (6) is in use.

5. A sleeping cab according to any one or more of claims 1 to 4, characterised in that the front wall (5) of the cab is sloping or curved and is of aerodynamically optimum construction.

6. A sleeping cab according to any one or more of claims 1 to 5, characterised in that the cab (7) is mounted rotatably in joints (8, 8"), and is hydraulically or penumatically extendable and retractable by means of a cylinder (9) located on the rear wall of the cab.

7. A sleeping cab according to any one or more of claims 1 to 6, characterised in that the cab (7) is arranged with its side walls (10, 10') inside the side walls (11, 11') of the cab (4).

8. A sleeping cab according to any one or more of claims 1 to 6, characterised in that the cab (7) is arranged with its side walls (10, 10') outside the side walls (11, 11') of the cab (4).

9. A sleeping cab according to any one or more of claims 1 to 8, characterised in that between the side walls (10, 10') and (11, 11') and at least in some regions on the front wall (5), a noise-damping and heat-insulating layer (12) is arranged.

10. A sleeping cab according to any one or more of claims 1 to 9, characterised in that in the cab (7), upholstered backrests (13, 14) are arranged in approximately diagonal alignment to one another.

11. A sleeping cab according to any one or more of claims 1 to 10, characterised in that on the bottom side of the sleeping cab (1) there is arranged an entrance (14) [sic]* for climbing into the cab.

Fig.1

Fig. 2

10', 11'

8'

15

3

14

9

6

8

13

11

10

12

Fig. 3

Fig.4